(19) Europäisches Patentamt
European Patent Office
Office européen des brevets

(11) EP 4 227 449 A1

# (12) EUROPEAN PATENT APPLICATION

(43) Date of publication:
**16.08.2023 Bulletin 2023/33**

(21) Application number: **22156639.1**

(22) Date of filing: **14.02.2022**

(51) International Patent Classification (IPC):
***D01F 1/10*** *(2006.01)* ***D01F 6/60*** *(2006.01)*
***D01F 6/62*** *(2006.01)* *C08K 3/013* *(2018.01)*
*C08L 67/00* *(2006.01)* *C08L 77/00* *(2006.01)*

(52) Cooperative Patent Classification (CPC):
(C-Sets available)
**D01F 1/10; C08K 3/346; C08L 67/02; D01F 6/60; D01F 6/62;** C08K 2201/003; C08L 77/00 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **WANG, Qin**
  **Shanghai (CN)**
- **GUO, Mingcheng**
  **Shanghai (CN)**
- **YANG, Jian**
  **Shanghai (CN)**
- **KENCHAIAH, Lohith**
  **Bangalore (IN)**

(74) Representative: **Dehns**
**St. Bride's House**
**10 Salisbury Square**
**London EC4Y 8JD (GB)**

## (54) FIBERS COMPRISING REINFORCEMENT ADDITIVES AND RECYCLED CONTENTS

(57) Disclosed is a fiber composition comprising from about 60 wt.% to about 99 wt.% of a polymer base resin and from about 0.1 wt.% to about 40 wt.% of a reinforcing filler, wherein the combined weight percent value of all components does not exceed 100 wt.%, and all weight percent values are based on the total weight of the fiber composition, wherein the fiber composition is in the form of a fiber, and wherein the fiber exhibits a tensile modulus of greater than 1950 MPa when tested in accordance with ISO 527.

EP 4 227 449 A1

(52) Cooperative Patent Classification (CPC): (Cont.)

C-Sets
**C08L 67/02, C08L 67/02, C08K 3/346**

## Description

### FIELD OF THE DISCLOSURE

The present disclosure relates to fibers comprising recycled materials, and in particular, fibers comprising recycled materials and reinforcing additives.

### BACKGROUND OF THE DISCLOSURE

Polymer filaments, fibers and other very fine polymer extrudates may be used in a number of applications. Generally, polybutylene terephthalate PBT has high softness, elasticity, and is process friendly, and hence is used in high-end fiber applications. As there is a growing demand for more sustainable materials, post-consumer recycled (PCR) polymers including post-consumer recycled PBT are increasingly desired for fiber applications. Fiber spun from certain post-consumer recycled PBT resin typically exhibit poor mechanical properties as evidenced by their lower stress/modulus and thermal stability when compared to virgin PBT. There remains a need in the art for recycled polymer filaments exhibiting improved mechanical properties.

Aspects of the present disclosure addresses these and other needs.

### SUMMARY

Aspects of the disclosure relate to a fiber composition comprising: from about 60 wt.% to about 99 wt.% of a polymer base resin; and from about 0.1 wt.% to about 40 wt.% of a reinforcing filler, wherein the combined weight percent value of all components does not exceed 100 wt.%, and all weight percent values are based on the total weight of the fiber composition, wherein the fiber composition is in the form of a fiber, and wherein the fiber exhibits a tensile modulus of greater than 1950 MPa when tested in accordance with ISO 527.

In further aspects, the present disclosure relates to a melt spun monofilament comprising from about 60 wt.% to about 99 wt.% of a polymer base resin; and from about 0.1 wt.% to about 40 wt.% of a reinforcing filler, wherein the combined weight percent value of all components does not exceed 100 wt.%, and all weight percent values are based on the total weight of the monofilament, wherein the monofilament exhibits a tensile modulus of greater than 1950 MPa when tested in accordance with ISO 527.

### DETAILED DESCRIPTION

Polymer filaments, fibres, and other very fine polymer extrudates may be used in a number of applications, including textiles. PBT is generally desirable in high-end applications because the polymer possesses high softness and elasticity and is process friendly. As there is a growing demand for more sustainable materials, post-consumer recycled (PCR) polymers, including post-cosnsumer recycled PBT, are increasingly desired for fiber applications. Fiber spun from certain post-consumer recycled PBT resin typically exhibit poor mechanical properties as evidenced by their lower stress/modulus and thermal stability when compared to virgin PBT. Because modulus and stress performance are key indicators of a fiber's deformation resistance, articles formed from such polymeric fibers may exhibit suboptimal properties.

Fiber compositions of the present disclosure overcome the conventional mechanical and physical shortcomings typified by fibers or filaments formed with chemical upcycled PBT derived from PET. Compositions of the present disclosure resolve the lower tensile stress and modulus challenge of conventional recycled PBT.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

**Filament**

Aspects of the disclosure relate to a composite comprising a thermoplastic polymer component (including a polyester) and filler. The thermoplastic polymer component may include any suitable thermoplastic polymer. Examples include, but are not limited to, polycarbonate, polyetherimide, liquid crystal polymer, polyamide, polyimide, polyester, copolymers thereof, blends thereof, or combinations thereof. In specific examples, the polymer component is a chemical recycled poly(butylene terephthalate), named as iQ PBT, derived from a chemical upcycled (or post-consumer recycled) PET. Fibers formed from iQ PBT provide an environmentally friendly advantage that provide desirable elastic modulus, stress at break, and elongation at break.

Disclosed herein are chemical recycled polyester compounds with suitable fillers filled for spinning fiber applications. The filler may help the compounds to achieve higher fiber modulus and strength. Suitable fillers may include fine talc, carbon filler or fiber, glass fiber, among other organic and inorganic filler.

The disclosed fiber composition may be used to form a fiber or filament, which may have a diameter (cross-sectional dimension) of about 1 micron to about 10 mm. Micron and sub-micron fibers may be formed by methods known in the art. Such methods include melt-spinning, spunbonded, and melt-blown methods. Aspects of the present disclosure may feature fibers or filaments formed via melt-spinning processes. For example, a composition comprising can be melt spun through spinneret orifices to produce a plurality of filaments or monofilaments.

**Polymer Base Resin**

In various aspects, the composite can comprise a thermoplastic resin or a thermoset resin. The thermoplastic resin may comprise polypropylene, polyethylene, ethylene based copolymer, polyamide, polycarbonate, polyester, polyoxymethylene (POM), polybutylene terephthalate (PBT), polyethylene terephthalate (PET), polycyclohexylendimethylene terephthalate (PCT), liquid crystal polymers (LCP), polyphenylene sulfide (PPS), polyphenylene ether (PPE), polyphenylene oxide-polystyrene blends, polystyrene, high impact modified polystyrene, acrylonitrile-butadiene-styrene (ABS) terpolymer, acrylic polymer, polyetherimide (PEI), polyurethane, polyetheretherketone (PEEK), polylactic acid (PLA) based polymers, poly ether sulphone (PES), and combinations thereof. The thermoplastic resin can also include thermoplastic elastomers such as polyamide and polyester based elastomers. The base substrate can also comprise blends and/or other types of combination of resins described above. In various aspects, the composite may also comprise a thermosetting polymer. Appropriate thermosetting resins can include phenol resin, urea resin, melamine-formaldehyde resin, urea-formaldehyde latex, xylene resin, diallyl phthalate resin, epoxy resin, aniline resin, furan resin, polyurethane, or combinations thereof.

In various aspects of the present disclosure, the thermoplastic resin may comprise a polyester. For example, the thermoplastic resin may comprise a polyalkylene ester (a polyester), such as a polyalkylene terephthalate polymer.

Polyesters have repeating units of the following formula (A):

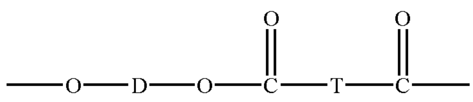 (A)

wherein T is a residue derived from a terephthalic acid or chemical equivalent thereof, and D is a residue derived from polymerization of an ethylene glycol, butylene diol, specifically 1,4-butane diol, or chemical equivalent thereof. Chemical equivalents of diacids include dialkyl esters, for example, dimethyl esters, diaryl esters, anhydrides, salts, acid chlorides, acid bromides, and the like. Chemical equivalents of ethylene diol and butylene diol include esters, such as dialkylesters, diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions. Poly(alkylene arylates) can have a polyester structure according to formula (A), wherein T comprises groups derived from aromatic dicarboxylates, cycloaliphatic dicarboxylic acids, or derivatives thereof.

Examples of specifically useful T groups include, but are not limited to, 1,2-,1,3-, and 1,4-phenylene; 1,4- and 1,5-naphthylenes; cis- or trans- 1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans-1,4-(cyclohexylene)dimethylene.

Examples of polyalkylene terephthalate include polyethylene terephthalate (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing polyesters may also be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s. Of these, a specific example is poly(1,4-cyclohexane- dimethanol-1,4-cyclohexanedicarboxylate) (PCCD), having recurring units of formula (B):

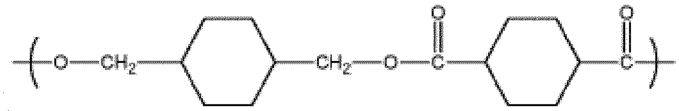
(B)

wherein, as described using formula (A), $R^2$ is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In another aspect, the composition can further comprise poly(1,4-butylene terephthalate) or "PBT" resin. PBT may be obtained by polymerizing a glycol component of which at least 70 mol %, preferably at least 80 mol %, consists of tetramethylene glycol and an acid or ester component of which at least 70 mol %, preferably at least 80 mol %, consists of terephthalic acid and/or polyester-forming derivatives thereof. Commercial examples of PBT include those available under the trade names VALOX™ 315, VALOX™ 195 and VALOX™ 176, manufactured by SABIC™, having an intrinsic viscosity IV of 0.1 deciliters per gram (dl/g) to about 2.0 dl/g (or 0.1 dl/g to 2 dl/g) as measured in a 60:40 phenol/tetrachloroethane mixture or similar solvent at 23 degrees Celsius (°C) to 30° C. In one aspect, the PBT resin has an intrinsic viscosity of 0.1 dl/g to 1.4 dl/g (or about 0.1 dl/g to about 1.4 dl/g), specifically 0.5 dl/g to 1.3 dl/g (or about 0.5 dl/g to about 1.3 dl/g). A PBT having a low intrinsic viscosity may have an intrinsic viscosity of less than 1 dl/g, less than 0.9 dl/g or less than 0.8 dl/g. A PBT having a high intrinsic viscosity may have an intrinsic viscosity of greater than 1 dl/g or greater than 1 dl/g or from about 1 dl/g to about 1.4 dl/g according to certain aspects of the present disclosure. Intrinsic viscosity may be measured using a capillary rheometer in accordance with GB/T14190-2008.

Compositions of the present disclosure comprise a chemical upcycled polybutylene terephthalate (PBT) that is derived from a postconsumer recycled (PCR) polyester. In specific aspects, the PBT component may be derived from polyethylene terephthalate (PET). Thus, the polyester may comprise a PET-derived PBT component. The PBT component derived from the PCR polymer (such as PCR PET) may be formed according to conventional methods, and may include certain PBT plastics available from SABIC™.

In certain aspects, the chemical upcycled PBT may be obtained from polyethylene terephthalate. For example, the upcycled PBT may be obtained from a process of first depolymerizing PET and then repolymerizing monomers to PBT via transesterification. Compositions of the present disclosure comprising the chemical upcycled PBT (rPBT) may have properties comparable to virgin PBT with some limitations (for example, color, melting temperature $T_m$ are inferior).

In certain aspects the fiber composition may include from about 1 wt.% to about 99.9 wt.% of a chemical upcycled PBT component. The chemical upcycled PBT component may be formed from monomers derived from a PCR PET. In some aspects the chemical recycled PBT resin obtained via polymerization of around 60% BHET monomers, which was derived from post-consumer recycled PET wastes and around 40% BDO monomers.

Post-consumer or post-industrial recycle based components are specifically meant to be "up-cycled" polybutylene terephthalate (PBT) polymers. The term "up-cycled" constitutes the process where a post-consumer or post-industrial recycle polyethylene terephthalate (rPET) is chemically brought back to monomers, such as the terephthalate containing monomer bis(2-hydroxyethyl) terephthalate (BHET) and ethylene glycol (EG). Subsequently, BHET is polymerized with butanediol (BDO) to create PBT (or a chemical upcycled PBT, referred to herein as an rPBT).

Commercial examples of an upcycled PBT include those available under the trade name ELCRIN™ iQ Resin, manufactured by SABIC™. The PBT may be derived from the poly(ethylene terephthalate) component by any method that involves depolymerization of the poly(ethylene terephthalate) component and polymerization of the depolymerized poly(ethylene terephthalate) component with 1,4 butanediol to provide the PET-derived PBT. For example, the PET-derived poly(butylene terephthalate) component may be made by a process that involves depolymerizing a poly(ethylene terephthalate) and/or a poly(ethylene terephthalate) copolymer, with a 1,4 butanediol component at a temperature from 180 °C to 230 °C, under agitation, at a pressure that is at least atmospheric pressure in the presence of a catalyst

component, at an elevated temperature, under an inert atmosphere, to produce a molten mixture containing an oligomer containing ethylene terephthalate moieties, an oligomer containing ethylene isophthalate moieties, an oligomer containing diethylene terephthalate moieties, an oligomer containing diethylene isophthalate moieties, an oligomer containing butylene terephthalate moieties, an oligomer containing butylene isophthalate moieties, a covalently bonded oligomeric moiety containing at least two of the foregoing moieties, 1,4 butanediol, ethylene glycol, or a combination thereof; and agitating the molten mixture at sub-atmospheric pressure and increasing the temperature of the molten mixture to an elevated temperature under conditions sufficient to form a PET-derived PBT containing at least one residue derived from the poly(ethylene terephthalate) component.

The PET may be described as "post-consumer recycled PET," or "recycled PET," or "postindustrial recycled PET." The PET from which the chemical upcycled PBT is derived may be in any form suitable for the present disclosure. Generally, the PET component may include recycle (scrap) PET in flake, powder/chip, film, or pellet form. Before use, the PET is generally processed to remove impurities such as paper, adhesives, polyolefin, e.g., polypropylene, polyvinyl chloride (PVC), nylon, polylactic acid and other contaminants. Also, the PET component can include PET that is not waste in flake, chip or pellet form. As such, PET that would ordinarily be deposited in landfills can now be used productively and effectively. The PCR PET may be reclaimed from post-consumer sources, including but not limited to, home appliances waste for example TV, air-conditioners, washing machines, refrigerators, and like. In one embodiment, PET component can also include other polyesters. The PET component can also include polyester copolymers. Examples of such materials include polyalkylene terephthalates that can be selected from polyethylene terephthalate, polycyclohexane terephthalate, copolyesters of terephthalate esters with comonomers containing cyclohexyl dimethanol and ethylene glycol, copolyesters of terephthalate acid with comonomers containing cyclohexyl dimethanol and ethylene glycol, polybutylene terephthalate, poly-xylylene terephthalate, polydianol terephthalates, polybutylene terephthalate, polytrimethylene terephthalate, polyester naphthalates, and combinations thereof.

As used herein, a chemical upcycled PBT may thus comprise at least one impurity absent in a corresponding, substantially similar, or identical virgin PBT. As used herein, virgin PBT refers to PBT derived from petrochemical sources. Virgin PBT does not include recycled PBT or recycled PBT content. Virgin PBT, for example, is derived from monomers. The chemical upcycled PBT component derived from a PCR PET may thus comprise a polyethylene terephthalate residue, e.g., materials such as ethylene glycol and isophthalic acid groups. These components are not present in "virgin" or monomer-based PBT. A chemical upcycled PBT thus may be distinguished from a virgin PBT by the inclusion of at least 1 wt.% EG (ethylene glycol) unit and at least 0.5% DEG (or up to total 3.5% co-monomer), or an isophthalic acid unit within recycled PBT molecular chain. A virgin PBT resin however would only have terephthalic acid (TPA) and BDO monomers apparent.

The amount of the ethylene glycol groups, diethylene glycol groups, and the isophthalic groups in the polymeric backbone of the chemically recycled PBT component can vary. The PET-derived PBT component ordinarily contains isophthalic acid groups in an amount that is at least 0.1 mole % and can range from 0 or 0.1 to 10 mole % (0 or 0.07 to 7 wt. %). The PET-derived PBT component ordinarily contains ethylene glycol in an amount that is at least 0.1 mole % and can range from 0.1 to 10 mole % (0.02 to 2 wt. %). In one embodiment, the PET-derived PBT component has an ethylene glycol content that is more than 0.85 wt. %. The chemical upcycled PBT component can also contain diethylene glycol in an amount ranging from 0.1 to 10 mole % (0.04 to 4 wt. %). The amount of the butanediol groups is generally about 98 mole % and can vary from 95 to 99.8 mole % in some embodiments. The amount of the terephthalic acid groups is generally about 98 mole % and can vary from 90 to 99.9 mole % in some embodiments.

Unless otherwise specified, all molar amounts of the isophthalic acid groups and or terephthalic acid groups are based on the total moles of diacids/diesters in the composition. Unless otherwise specified, all molar amounts of the butanediol, ethylene glycol, and diethylene glycol groups are based on the total moles of diol in the composition. The weight percent measurements stated above are based on the way terephthalic acid groups, isophthalic acid groups, ethylene glycol groups, and diethylene glycol groups have been defined herein.

The total amount of materials of the polyethylene terephthalate component residue in the chemical upcycled polybutylene random copolymer may vary. For instance, mixtures can be in an amount ranging from 1.8 to 2.5 wt. %, or from 0.5 to 2 wt. %, or from 1 to 4 wt. %. The ethylene glycol, diethylene glycol, and cyclohexanedimethanol groups may be individually or in combination present in an amount ranging from 0.1 to 10 mole %, based on 100 mole % of glycol the molding composition. The isophthalic acid groups can be present in an amount ranging from 0.1 to 10 mole %, based on 100 mole % of diacid/diester in the molding composition.

It has been discovered that when it is desirable to make a polybutylene terephthalate copolymers having a melting temperature Tm that is at least 200° C., the total amount of diethylene glycol, ethylene glycol, and isophthalic acid groups should be within a certain range. As such, in one embodiment, the total amount of the diethylene glycol, ethylene glycol, and isophthalic acid groups in the PET-derived polybutylene terephthalate component is more than 0 and less than or equal to 23 equivalents, relative to the total of 100 equivalents of diol and 100 equivalents of diacid groups in the PET-derived polybutylene terephthalate random copolymer. In another suitable embodiment, the total amount of the isophthalic acid groups, ethylene glycol groups, and diethylene glycol groups ranges from 3 and less than

or equal to 23 equivalents, relative to the total of 100 equivalents of diol and 100 equivalents of diacid groups in the PET-derived polybutylene terephthalate copolymer. In another suitable embodiment, the total amount of the isophthalic acid groups, ethylene glycol groups, and diethylene glycol groups ranges from 3 and less than or equal to 10 equivalents, relative to the total of 100 equivalents of diol and 100 equivalents of diacid groups in the PET-derived polybutylene terephthalate random copolymer. In another suitable embodiment, the total amount of the isophthalic acid groups, ethylene glycol groups, and diethylene glycol groups ranges from 10 and less than or equal to 23 equivalents, relative to the total of 100 equivalents of diol and 100 equivalents of diacid groups in the PET-derived polybutylene terephthalate random copolymer. In one embodiment, diethylene glycol, ethylene glycol and/or isophthalic acid can be added during the process, thereby enabling the user with a system for making compositions having different properties.

The total ethylene glycol groups, isophthalic acid groups, and diethylene glycol groups can vary, depending on the application and the user's needs. In one aspect, the composition can have total monomer content selected from the group consisting of ethylene glycol, isophthalic acid groups, and diethylene glycol groups in an amount ranging from more than 0 and less than or equal to 17 equivalents relative to the total of 100 equivalents of diol and 100 equivalents of diacid groups in the PET-derived polybutylene terephthalate random copolymer. Advantageously, such compositions can maintain useful properties, such as heat deflection temperatures that are more than 180° C.

It has also been discovered that the total amount of inorganic residues derived from the polyethylene terephthalate can be present from more than 0 ppm and up to 1000 ppm. Examples of such inorganic residues can be selected from the group consisting of antimony-containing compounds, germanium-containing compounds, titanium-containing compounds, cobalt-containing compounds, tin containing compounds, aluminum, aluminum salts, alkaline earth metal salts, alkali salts, including calcium, magnesium, sodium and potassium salts, phosphorous-containing compounds and anions, sulfur-containing compounds and anions, and combinations thereof. In another embodiment, the amounts of inorganic residues can range from 250 to 1000 ppm. In another embodiment, the amounts of inorganic residues can range from 500 to 1000 ppm.

As described herein, the composition may comprise from about 40 wt. % to about 99 wt. % of a polyalkylene polymer. In further examples, the composition may comprise from about 50 wt. % to about 99 wt. % of a polyalkylene polymer, or from about 40 wt. % to about 99 wt. % of a polyalkylene polymer, or from about 55 wt. % to about 99 wt. % of a polyalkylene polymer, or from about 60 wt. % to about 99 wt. % of a polyalkylene polymer, or from about 70 wt. % to about 99 wt. % of a polyalkylene polymer, or from about 40 wt. % to about 99 wt. % of a polyalkylene polymer, or from about 55 wt. % to about 99 wt. % of a polyalkylene polymer, or from about 60 wt. % to about 95 wt. % of a polyalkylene polymer, or from about 75 wt. % to about 99 wt. %.

In yet further aspects, the disclosed compositions include from about 50 wt. % to about 99.99 wt. % of an upcycled PBT resin , or from about 40 wt. % to about 99 wt. % of an upcycled PBT resin, or from about 55 wt. % to about 99 wt. % of an upcycled PBT resin, or from about 60 wt. % to about 99 wt. % of an upcycled PBT resin, or from about 70 wt. % to about 99 wt. % of an upcycled PBT resin, or from about 40 wt. % to about 99 wt. % of an upcycled PBT resin, or from about 55 wt. % to about 99 wt. % of an upcycled PBT resin, or from about 60 wt. % to about 99 wt. % of an upcycled PBT resin, or from about 75 wt. % to about 99.98 wt. % of an upcycled PBT resin. In various aspects, the composite comprises a blend of thermoplastic resins, such as a blend of suitable upcycled PBT resin.

## Reinforcing Filler

The present compositions may comprise an inorganic filler or reinforcing agent. The specific composition of filler, if present, can vary, provided that the filler is chemically compatible with the remaining components of the thermoplastic composition. Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents may be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the fiber composition may comprise a mineral filler. Examples of mineral fillers include mica,

talc, calcium carbonate, dolomite, wollastonite, barium sulfate, silica, kaolin, feldspar, barytes, or the like, or a combination comprising at least one of the foregoing mineral fillers. The mineral filler may have an average particle size of about 0.1 to about 20 micrometers, specifically about 0.5 to about 10 micrometers, and more specifically about 1 to about 3 micrometers. In a specific example, the reinforcing filler is a mineral filler, such as fine talc, having an average particle size D50 less than 1.5 μm.

Suitable inorganic fillers may comprise, but are not limited to, metal silicates and silica powders; boron-containing oxides of aluminum (Al), magnesium (Mg), or titanium (Ti); anhydrous or hydrated calcium sulfate; wollastonite; hollow and/or solid glass spheres; kaolin; single crystal metallic or inorganic fibers or "whiskers"; glass fibers (including continuous and chopped fibers, including flat glass fibers) ; sulfides of molybdenum (Mo) or zinc (Zn); barium compounds; metals and metal oxides; flaked fillers; fibrous fillers; short inorganic fibers reinforcing organic fibrous fillers formed from organic polymers capable of forming fibers (e.g., polyether ether ketone (PEEK), polyetherimide (PEI), polytetrafluoroethylene (PTFE), polyphenylene sulfide (PPS)); and fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composite may comprise a glass fiber filler. In yet further aspects, the composite may be free or substantially free of a glass filler. In one aspect, the composition comprises an inorganic filler selected from glass fiber, glass flake, talc, clay, mica, wollastonite, titanium dioxide, or a combination thereof. mineral filler such as talc. In specific aspects, the reinforcing filler may comprise talc.

The reinforcing filler may have a certain particle size or average particle size. For example, the reinforcing filler may have a mean particle size ($D_{50}$) of from about 0.1 micrometers (μm) to about 10 μm. With respect to particle size distribution, D represents the diameter of particles, $D_{50}$ is a cumulative 50% point of diameter (or 50% pass particle or the value of the particle diameter at 50 % in the cumulative distribution); $D_{10}$ means a cumulative 10% point of diameter; and $D_{90}$ is a cumulative 90% point of diameter; $D_{50}$ is also called average particle size or median diameter. In a specific example, the reinforcing filler has a particle size or an average particle size of from about 1.1 μm and a D95 of about 3.5 μm. In a yet further example, the reinforcing filler comprises a fine talc having an average particle size D50 of less than 1.2 μm.

In some examples, the reinforcing filler may be present in the amount of about 0.01 wt. % to about 20 wt. %. In further examples, the reinforcing filler may be present in an amount from 0.01 wt. % to about 20 wt. %, 0.05 wt. % to about 20 wt. %, or 0.1 wt. % to about 20 wt. %.

### Additives

The disclosed thermoplastic composition can comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composite mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof. According to certain aspects, the polymer compositions may maintain mechanical and dielectric performance even with high levels of fillers (for example, greater than 30 wt. % filler based on the total weight of the polymer composition).

The composite disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composite may comprise a glass fiber filler. For example, the composite may comprise from about 0.01 wt. % to about 25 wt. %, from about 10 wt. % to about 25 wt. %, from about 15 wt. % to about 25 wt. %, of a glass fiber filler based on the total weight of the composite. In yet further aspects, the composite may be free or substantially free of a glass filler.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of

para-cresol or dicyclopentadiene; alkylated hydroquinones; hydroxylated thiodiphenyl ethers; alkylidenebisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In specific aspects, the antioxidant is a hindered phenol, such as Irganox™ 1010, available from BASF. Hindered phenols may be of the type in which there is a sterically hindered phenolic group, especially one containing a t-butyl group in the ortho position to the phenolic OH group. Examples of such compounds are many. Examples are, tetrakis (methylene-3-(-3',5'-di-tert-butyl-4'-hydroxyphenyl)-propionate) methane; octadecyl-3-(3',5'-di-tert-butyl-4'-hydroxyphenyl) propionate; 1,3,5-trimethyl-2,4,6-tris(3,5-di-tert-butyl-4-hydroxybenzyl)benzene; 2,2'-thiodiethylbis(3-(3,5-di-tert-butyl-4-hydroxyphenyl))propionate; octadecyl-3,5-di-tert-butyl-4-hydroxyhydrocinnamate and mixtures of any of the foregoing. In some instances octadecyl-3,5-di-tert-butyl-4-hydroxyhydrocinnamate, which is commercially available as Irganox™1076 is useful. Further examples of the above-mentioned phenolic antioxidant include known compounds, for example, monophenolic compounds such as, 2,6-di-t-butyl-4-ethylphenol and octadecyl-3-(3,5-di-t-butyl-4-hydroxyphenyl) propionate, bisphenolic compounds such as 2,2'-methylene-bis-(4-methyl-6-t-butylphenol), 2,2'-methylene-bis-(4-ethyl-6-t-butylphenol), and 4,4'-butylidenebis-(3-methyl-6-di-t-butylphenol), and high-molecular phenolic compounds such as 1,1,3-tris(2-methyl-4-hydroxy-5-t-butylphenyl)butane, tetrakis[methylene-3-(3',5'-dit-butyl-4'-hydroxyphenyl) propionate]methane, bis[3,3'-bis(4'-hydroxy-3'-t-butylphenyl)butyric acid] glycol ester and the like. They can each be used in an amount of 0.001 to 2.0 wt. %, preferably 0.05 to 1.0 wt. % based on the composition.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler. The thermoplastic composition can also comprise plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof for example, methyl stearate and polyethylene-polypropylene glycol copolymers in a suitable solvent; or combinations including at least one of the foregoing lubricants. Lubricants can generally be used in amounts of from

about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An anti drip agent, such as TSAN, can be used in amounts of 0.1 to 10 parts by weight, based on 100 parts by weight of the total composition, excluding any filler.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the IZOD impact strength) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0 °C. In certain aspects, the glass transition temperature ($T_g$) can be less than -5 °C, -10 °C, -15 °C, with a $T_g$ of less than -30 °C typically providing better performance. Representative rubbery impact modifiers can include, for example, functionalized polyolefin ethylene-acrylate terpolymers, such as ethylene-acrylic estersmaleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

In an aspect, suitable impact modifiers can include an epoxy-functional block copolymer. The epoxy-functional block copolymer can include units derived from a $C_{2-20}$ olefin and units derived from a glycidyl (meth)acrylate. Exemplary olefins include ethylene, propylene, butylene, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene.

In addition to glycidyl (meth)acrylate units, the epoxy-functional block copolymers can further include additional units, for example $C_{1-4}$ alkyl (meth)acrylate units. In one aspect, the impact modifier is terpolymeric, comprising polyethylene blocks, methyl acrylate blocks, and glycidyl methacrylate blocks. Specific impact modifiers are a coor terpolymer including units of ethylene, glycidyl methacrylate (GMA), and methyl acrylate. Suitable impact modifiers include the ethylene-methyl acrylate-glycidyl methacrylate terpolymer comprising 8 wt. % or about 8 wt. % glycidyl methacrylate units available under the trade name LOTADER™ AX8900 from Arkema. Another epoxy-functional block copolymer that can be used in the composition includes ethylene acrylate, for example an ethylene-ethylacrylate copolymer having an ethylacrylate content of less than 20%, available from Rohm and Haas (Dow Chemical) under the trade name Paraloid™ EXL-3330. It will be recognized that combinations of impact modifiers may be used.

In some aspects, the impact modifier may be present in an amount from greater than 0 wt. % to 10 wt. % or from greater than 0 wt. % to about 10 wt. %. In further aspects, the impact modifier is present in an amount from 0.01 wt. % to 8 wt. % or from about 0.01 wt. % to about 8 wt. %, or from 0.01 wt. % to 7 wt. % or from about 0.01 wt. % to about 7 wt. %, or from 0.01 wt. % to 6 wt. % or from about 0.01 wt. % to about 6 wt. %, or from 2 wt. % to 8 wt. % or from about 2 wt. % to about 8 wt. %, or from 3 wt. % to 7 wt. % or from about 3 wt. % to about 7 wt. %.

## Properties and Articles

In certain aspects, the disclosed fiber composition may exhibit certain properties when configured as or formed into a fiber or filament. The disclosed fiber composition may withstand melt processing for fiber or monofilament formation while also maintaining structural properties. For example, compared to reference formulations for fiber compositions including the same reinforcing filler, but including a chemical upcycled PBT, the disclosed compositions form fibers that exhibit a tensile modulus of greater than 1950 MPa when tested in accordance with ISO 527.

Advantageously, despite using a chemical upcycled PBT (which is structurally different from virgin PBT), the disclosed fiber compositions provide filaments that exhibit similar performance properties as filaments formed from molding compositions containing monomer-based (or virgin) PBT. The disclosed compositions may thus provide an efficient means of using underutilized scrap PET in PBT thermoplastic compositions and is an effective use of post-consumer or post-industrial streams. Further, the disclosed fiber compositions are environmentally desirable and may contribute to the preservation of nonrenewable resources. Surprisingly, monofilaments melt-spun from the disclosed

fiber composition may exhibit improved tensile properties when compared to a fiber melt-spun from a reference composition comprising the reinforcing filler and a virgin PBT.

In various aspects, the present disclosure relates to articles comprising the compositions herein. Aspects of the present disclosure include articles comprising the fiber composition such as one or more fibers or filaments. Still another embodiment of the present disclosure is an article (for example, a textile, or filament) comprising the fiber composition. The fiber composition may be used to form monofilaments by known processes such as melt spinning. Monofilaments of the disclosed compositions may be useful in making fabrics or other textiles. Still, the advantageous characteristics of the compositions disclosed herein can make them appropriate for an array of uses.

**Methods for Making the Fiber Composition**

Aspects of the disclosure further relate to methods for making a fiber composition including a recycled PBT and reinforcing filler. In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twin-screw extruder. In various further aspects, the composition can be processed in an extruder at temperatures from about 180 °C to about 350 °C, particularly 250 °C to 300 °C.

Methods may further comprise processing the composition to provide a filament or fiber of a desired diameter. Melt spinning, melt blowing, spunbonded, and fused filament fabrication (FFF) processes are examples of methods for forming the filament or fiber comprising the composition. A fiber, or filament, or monofilament may be formed by a process of melt spinning. Such filaments can be formed by extruding a molten thermoplastic material, or coextruding more than one molten thermoplastic material, as filaments from a plurality of fine (typically circular) capillaries in a spinneret. The diameter of the capillaries being selected in view of the desired fiber cross-sectional dimension (e.g., diameter). As filaments exit the capillaries, the diameter of the extruded filaments is typically rapidly reduced, for example, by non-eductive or eductive fluid-drawing or other well-known melt spinning mechanisms. Further examples of producing spunbonded nonwoven webs can be found in U.S. Patent Nos. 4,340,563; 3,692,618; 3,338,992; 3,341,394; 3,276,944; 3,502,538; 3,502,763; and 3,542,615.

A method of forming a polymer fiber or a plurality of polymer fibers may comprise forming a melt mixture comprising from about 60 wt.% to about 99 wt.% of a polymer base resin and from about 0.1 wt.% to about 40 wt.% of a reinforcing filler. The melt mixture may be extruded through a spinneret to form a filament or a plurality of filaments. The filament or plurality of filaments may be allowed to solidify to form the fiber or plurality of polymer fibers. Each of the plurality of polymer fibers may exhibit a tensile modulus of greater than 1950 megapascals (MPa) when tested in accordance with ISO 527.

Various combinations of elements of this disclosure are encompassed by this disclosure, for example, combinations of elements from dependent claims that depend upon the same independent claim.

**Definitions**

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

In one aspect, "substantially free of' can be less than about 0.5 weight percent (wt.%). In another aspect, substantially free of can be less than about 0.1 wt.%. In another aspect, substantially free of can be less than about 0.01 wt.%. In yet another aspect, substantially free of can be less than about 100 ppm. In yet another aspect, substantially free can refer to an amount, if present at all, below a detectable level. For example, the carbon fiber filler or composite may be free of or substantially free of carbon nanotubes, carbon platelets, or carbon powder.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

The terms "BisA," "BPA," or "bisphenol A," which can be used interchangeably, as used herein refers to a compound having a structure represented by the formula:

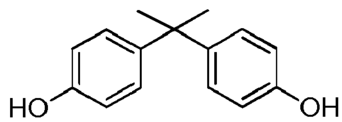

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

A fiber, or filament, or monofilament may be formed by a process of melt spinning. Such filaments can be formed by extruding a molten thermoplastic material, or coextruding more than one molten thermoplastic material, as filaments from a plurality of fine (typically circular) capillaries in a spinneret. The diameter of the capillaries being selected in view of the desired fiber cross-sectional dimension (e.g., diameter). As filaments exit the capillaries, the diameter of the extruded filaments is typically rapidly reduced, for example, by non-eductive or eductive fluid-drawing or other well-known melt spinning mechanisms. Further examples of producing spunbonded nonwoven webs can be found in U.S.

Patent Nos. 4,340,563; 3,692,618; 3,338,992; 3,341,394; 3,276,944; 3,502,538; 3,502,763; and 3,542,615.

The term "meltblown fiber" or "meltblown filament" may refer to fibers formed by extruding a molten thermoplastic material through a plurality of fine (typically circular) die capillaries as molten threads or filaments into a high velocity gas (e.g. air) stream which attenuates the filaments of molten thermoplastic material to reduce their diameters, which may be to microfiber diameter. Thereafter, the meltblown fibers are carried by the high-velocity gas stream and are deposited on a collecting surface to form a web of randomly disbursed meltblown fibers to form a meltblow fabric. The meltblown process is well-known and is described in various patents including U.S. Patent No. 3,849,241.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2

parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

Unless otherwise stated to the contrary herein, all test standards are the most recent standard in effect at the time of filing this application. Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Aspects of the Disclosure

The present disclosure pertains to and includes at least the following aspects.

Aspect 1. A fiber composition comprising: from about 10 wt.% to about 99 wt.% of a polymer base resin; and from about 0.1 wt.% to about 20 wt.% of a reinforcing filler, wherein the combined weight percent value of all components does not exceed 100 wt.%, and all weight percent values are based on the total weight of the composite, wherein the fiber composition is in the form of a fiber, and wherein the fiber exhibits a tensile modulus of greater than 1950 MPa when tested in accordance with ISO 527.

Aspect 2. The fiber composition of aspect 1, wherein the polymer base resin comprises a semi-crystalline polymer.

Aspect 3. The fiber composition of aspect 1, wherein the polymer base resin comprises a polyamide or a polyester.

Aspect 4. The fiber composition of aspect 1, wherein the polymer base resin comprises a chemical upcycled polybutylene terephthalate (PBT) component, which was derived from a post-consumer recycled (PCR) polyester.

Aspect 5. The fiber composition of aspect 4, wherein the PCR polyester is recycled from polyethylene terephthalate waste.

Aspect 6. The fiber composition of any one of aspects 1-5, wherein the fiber has a diameter of from about 1 $\mu$m to about 10 mm.

Aspect 7. The fiber composition of any one of aspects 1-6, wherein the fiber is a monofilament fiber.

Aspect 8. The fiber composition of any one of aspects 1-7, wherein the reinforcing filler has an average particle size distribution of less than 10 $\mu$m.

Aspect 9. The fiber composition of any one of aspects 1-8, wherein the reinforcing filler comprises talc, wollastonite, glass fibers, carbon fibers, or a combination thereof.

Aspect 10. The fiber composition of any one of aspects 1-9, wherein the reinforcing filler has an average particle size distribution $D_{50}$ of less than 1.5 $\mu$m.

Aspect 11. The fiber composition of any one of aspects 1-9, wherein the reinforcing filler comprises talc.

Aspect 12. The fiber composition of any one of aspects 1-9, wherein the reinforcing filler comprises talc having an average particle size distribution $D_{50}$ of less than 1.2 $\mu$m.

Aspect 13. The fiber composition according to any of aspects 1-12, wherein the fiber composition further comprises from greater than 0 wt.% to about 2 wt.% of an epoxy impact modifier.

Aspect 14. The fiber composition of any one of aspects 1 to 11, wherein the fiber composition further comprises from greater than 0 wt.% to about 5 wt.% of at least one stabilizer, wherein the at least one stabilizer comprises a UV stabilizer, a zinc phosphate stabilizer, or a combination thereof.

Aspect 15. An article comprising the fiber composition according to any of aspects 1 to 14, wherein the article is a component of a textile.

Aspect 16. A monofilament comprising the fiber composition according to any one of aspects 1 to 14.

Aspect 17. A method of forming a plurality of polymer fibers, the method comprising: forming a melt mixture comprising from about 60 wt.% to about 99 wt.% of a polymer base resin and from about 0.1 wt.% to about 40 wt.% of a reinforcing filler; extruding the melt mixture through a spinneret to form a plurality of filaments; and allowing the plurality of filaments to solidify to form the plurality of polymer fibers, wherein each of the plurality of polymer fibers exhibits a tensile modulus of greater than 1950 megapascals (MPa) when tested in accordance with ISO 527.

Aspect 18. The method of aspect 17, wherein forming the melt mixture comprises melting the polymer base resin.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (for example, amounts, and temperature), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt.%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

*General Materials and Methods*

The fiber compositions as set forth in the Examples below were prepared from the components presented in Table 1.

Table 1. Components of the formulations

| Item | Item Description | Chemical Description | Source |
|---|---|---|---|
| **rPBT 315** | Post consumer recycled polybutylene terephthalate (high intrinsic viscosity IV, 1.2 dl/g) | PBT | SABIC™ |
| **rPBT 195** | Post consumer recycled polybutylene terephthalate (low IV, 0.7 dl/g) | PBT | SABIC™ |
| **$PBT_{high}$** | Virgin PBT $_{high}$ viscosity (IV about 1.25 dl/g) | $PBT_{high}$ | SABIC™ |
| **$PBT_{low}$** | Virgin $PBT_{low}$ viscosity (IV about 0.75 dl/g) | $PBT_{low}$ | |
| **Fine talc** | Fine talc (particle size: diameter D50 about 1.1 μm and D95 about 3.5 μm | Fine talc | Imerys™ |
| Antioxidant | Hindered phenol, Irganox™ 1010 | Hindered phenol | BASF |

Formulations were prepared by extruding the pre-blended components using a twin extruder. The composition was melt-kneaded and extruded. The extrudate was cooled using a water bath prior to pelletizing. Components were compounded using a 37 mm Toshiba TEM-37BS Twin Screw Extruder co-rotating twin screw extruder with the compounding settings set forth in Table 2.

Table 2. Compounding conditions.

| | Output | Screw | Vacuum (Mpa) | Torque (%) | Barrel temp. (°C) | Die head temp. (°C) |
|---|---|---|---|---|---|---|
| Setting condition | 40 | 350 | -0.08 | 50-65 | 250-255 | 255 |

The extruded compositions were then formed into monofilament fibers having a diameter of 300 μm according to the spinning conditions in Table 3.

| Molding parameters | Unit | Value |
|---|---|---|
| **Pre-drying time** | Hour | 4-6 |
| **Pre-drying temp** | °C | 120 |
| **Maximum Moisture content** | % | 0.02 |
| **Melt Temp** | °C | 260 ~ 290 |
| **Spinhead Temp** | °C | 260 ~ 300 |
| **Roll Temp** | °C | 40 ~ 100 |

The monofilament fibers formed were evaluated for their tensile and modulus performance. Tensile performance was measured according to ISO 527, at a test speed of 50 mm/min from which the properties Et $\sigma_b$ and $\varepsilon_b$ were obtained. Et is the modulus, expressed in MPa; $\sigma_b$ is the stress at break, express in MPa; $\varepsilon_b$ is the stain or elongation at break, expressed in %. Melt Volume Rate (MVR) was measured using granules dried for 4 hrs at 90°C, according to ASTM D1238.

Table 4 presents the comparative (C1, C2) and inventive samples (EX-1, EX-2) prepared.

| | Item Description | Units | C1 | C2 | EX-1 | EX-2 |
|---|---|---|---|---|---|---|
| | **rPBT 315** | % | - | 80 | 80 | 80 |
| | **rPBT 195** | % | - | 19.9 | 19.4 | 18.9 |
| | **Virgin $PBT_{high}$** | % | 80 | - | - | - |
| | **Virgin $PBT_{low}$** | % | 19.9 | - | - | - |
| | **AO** | % | 0.1 | 0.1 | 0.1 | 0.1 |
| | Fine talc | % | - | - | 0.5 | 1 |
| Flowability | **MVR at 250 °C /2.16kg** | $cm^3$/10 min | 20 | 22 | 17 | 14 |
| Fiber properties | **Modulus $E_t$** | Modulus | 1927 | 1860 | 1965 | 2031 |
| | **Stress $\sigma_b$** | Modulus | 247 | 208 | 269 | 281 |
| | **Strain $\varepsilon_b$** | % | 79 | 79 | 74 | 73 |

C-1 is control sample of virgin PBT, C-2 is the control sample of rPBT. EX-1 to EX-2 are inventive formulations using rPBT.

Compare with C1 (fiber spun from virgin PBT), fiber spun from rPBT compounds shows lower modulus and stress. With the incorporation of fine talc into the rPBT compounds (EX-1 and EX-2), modulus and stress were highly improved. Also, the modulus and stress improvement increased with increasing talc loading. The reinforced rPBT fibers also showed higher performance than virgin PBT fibers. Fiber made from the recycled PBT exhibited lower stress and modulus compared to the virgin PBT.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A fiber composition comprising:

from about 10 wt.% to about 99 wt.% of a polymer base resin; and
from about 0.1 wt.% to about 20 wt.% of a reinforcing filler,
wherein the combined weight percent value of all components does not exceed 100 wt.%, and all weight percent values are based on the total weight of the composite,
wherein the fiber composition is in the form of a fiber, and
wherein the fiber exhibits a tensile modulus of greater than 1950 MPa when tested in accordance with ISO 527.

**2.** The fiber composition of claim 1, wherein the polymer base resin comprises a semi-crystalline polymer.

**3.** The fiber composition of claim 1, wherein the polymer base resin comprises a polyamide or a polyester.

**4.** The fiber composition of claim 1, wherein the polymer base resin comprises a chemical upcycled polybutylene terephthalate (PBT) component, which was derived from a post-consumer recycled (PCR) polyester.

**5.** The fiber composition of claim 4, wherein the PCR polyester is recycled from polyethylene terephthalate waste.

**6.** The fiber composition of any one of claims 1-5, wherein the fiber has a diameter of from about 1 μm to about 10 mm.

**7.** The fiber composition of any one of claims 1-6, wherein the fiber is a monofilament fiber.

**8.** The fiber composition of any one of claims 1-7, wherein the reinforcing filler has an average particle size distribution of less than 10 μm.

**9.** The fiber composition of any one of claims 1-8, wherein the reinforcing filler comprises talc, wollastonite, glass fibers, carbon fibers, or a combination thereof.

**10.** The fiber composition of any one of claims 1-9, wherein the reinforcing filler has an average particle size distribution $D_{50}$ of less than 1.5 μm.

**11.** The fiber composition of any one of claims 1-9, wherein the reinforcing filler comprises talc.

**12.** The fiber composition according to any of claims 1-11, wherein the fiber composition further comprises from greater than 0 wt.% to about 2 wt.% of an epoxy impact modifier.

**13.** The fiber composition of any one of claims 1-12, wherein the fiber composition further comprises from greater than 0 wt.% to about 5 wt.% of at least one stabilizer, wherein the at least one stabilizer comprises a UV stabilizer, a zinc phosphate stabilizer, or a combination thereof.

**14.** A monofilament comprising the fiber composition according to any one of claims 1-13.

**15.** A method of forming a plurality of polymer fibers, the method comprising:

a. forming a melt mixture comprising from about 60 wt.% to about 99 wt.% of a polymer base resin and from about 0.1 wt.% to about 40 wt.% of a reinforcing filler;
b. extruding the melt mixture through a spinneret to form a plurality of filaments; and
c. allowing the plurality of filaments to solidify to form the plurality of polymer fibers,

wherein each of the plurality of polymer fibers exhibits a tensile modulus of greater than 1950 megapascals (MPa) when tested in accordance with ISO 527.

Europäisches Patentamt
European Patent Office
Office européen des brevets

# EUROPEAN SEARCH REPORT

Application Number
EP 22 15 6639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/41311 A1 (BASF AG [DE]) 19 August 1999 (1999-08-19) | 1,6-11, 13-15 | INV. D01F1/10 D01F6/60 D01F6/62 |
| A | * page 1, line 6 - line 21 * * example 3 * * page 9, line 1 - line 4 * | 2-5,12 | |
| X | WO 03/085049 A1 (CARBON NANOTECHNOLOGIES INC [US]) 16 October 2003 (2003-10-16) | 1-3,6,7, 13,14 | ADD. C08K3/013 C08L67/00 C08L77/00 |
| A | * page 1, line 6 - line 8 * * example 1 * | 4,5, 8-12,15 | |
| X | WO 2006/010521 A1 (DSM IP ASSETS BV [NL]) 2 February 2006 (2006-02-02) | 1,2,6,7, 13,14 | |
| A | * page 1, line 1 - line 8 * * example 1 * | 3-5, 8-12,15 | |
| X | WO 2012/160288 A1 (ARKEMA FRANCE [FR]; CENTRE NAT RECH SCIENT [FR]) 29 November 2012 (2012-11-29) | 1,2,6,7, 13,14 | |
| A | * page 1, line 1 - line 7 * * example 1 * | 3-5, 8-12,15 | TECHNICAL FIELDS SEARCHED (IPC) |
| X | WO 2018/172983 A1 (RELIANCE IND LTD [IN]) 27 September 2018 (2018-09-27) | 1,2, 6-11,13, 14 | D01F |
| A | * page 1, line 1 - line 2 * * example 1 * | 3-5,12, 15 | |
| X | EP 1 574 551 A1 (TEIJIN LTD [JP]) 14 September 2005 (2005-09-14) | 1-3,6,7, 13,14 | |
| A | * paragraph [0001] * * example 1 * | 4,5, 8-12,15 | |
| X | US 2004/180201 A1 (VEEDU SREEKUMAR T [US] ET AL) 16 September 2004 (2004-09-16) | 1,6,7, 13,14 | |
| A | * paragraph [0003] * * example 6 * | 2-5, 8-12,15 | |
| | -/-- | | |

The present search report has been drawn up for all claims

| Place of search | Date of completion of the search | Examiner |
|---|---|---|
| The Hague | 8 July 2022 | Lichau, Holger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

Europäisches Patentamt
European Patent Office
Office européen des brevets

# EUROPEAN SEARCH REPORT

Application Number
EP 22 15 6639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/213450 A1 (WINEY KAREN I [US] ET AL) 13 September 2007 (2007-09-13) | 1,2,6,7, 13,14 | |
| A | * paragraph [0003] * * examples * | 3-5, 8-12,15 | |
| X | US 2014/080993 A1 (YU WILLIE KA YEUNG [HK]) 20 March 2014 (2014-03-20) | 1,2,6,7, 13-15 | |
| A | * paragraph [0001] * * examples * | 3-5,8-12 | |
| X | JP 2005 263951 A (TEIJIN LTD) 29 September 2005 (2005-09-29) | 1-3,6-8, 10,13,14 | |
| A | * paragraph [0001] * * reference example 3 * | 4,5,9, 11,12,15 | |
| X | JP 2006 083482 A (TEIJIN LTD) 30 March 2006 (2006-03-30) | 1-3,6,7, 13,14 | |
| A | * paragraph [0001] * * example 1 * | 4,5, 8-12,15 | |
| X | JP 2006 307367 A (TEIJIN LTD) 9 November 2006 (2006-11-09) | 1-3,6,7, 13,14 | TECHNICAL FIELDS SEARCHED (IPC) |
| A | * paragraph [0001] * * example 1 * | 4,5, 8-12,15 | |
| A | WO 2021/229470 A1 (SHPP GLOBAL TECH BV [NL]) 18 November 2021 (2021-11-18) * paragraph [0016] - paragraph [0021] * * paragraph [0052] * | 4,5 | |

The present search report has been drawn up for all claims

| Place of search | Date of completion of the search | Examiner |
|---|---|---|
| The Hague | 8 July 2022 | Lichau, Holger |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 15 6639

This annex lists the patent family members relating to the patent documents cited in the above-mentioned European search report. The members are as contained in the European Patent Office EDP file on
The European Patent Office is in no way liable for these particulars which are merely given for the purpose of information.

08-07-2022

| Patent document cited in search report | Publication date | Patent family member(s) | Publication date |
|---|---|---|---|
| WO 9941311 A1 | 19-08-1999 | AU 2721599 A | 30-08-1999 |
| | | DE 19805586 A1 | 19-08-1999 |
| | | WO 9941311 A1 | 19-08-1999 |
| WO 03085049 A1 | 16-10-2003 | EP 1461390 A1 | 29-09-2004 |
| | | JP 2005521779 A | 21-07-2005 |
| | | US 2004022981 A1 | 05-02-2004 |
| | | WO 03085049 A1 | 16-10-2003 |
| WO 2006010521 A1 | 02-02-2006 | AT 481514 T | 15-10-2010 |
| | | CA 2574128 A1 | 02-02-2006 |
| | | CN 1981073 A | 13-06-2007 |
| | | CN 101905879 A | 08-12-2010 |
| | | EP 1771608 A1 | 11-04-2007 |
| | | IL 180480 A | 30-06-2010 |
| | | JP 4669876 B2 | 13-04-2011 |
| | | JP 2008508433 A | 21-03-2008 |
| | | US 2008145301 A1 | 19-06-2008 |
| | | WO 2006010521 A1 | 02-02-2006 |
| WO 2012160288 A1 | 29-11-2012 | FR 2975708 A1 | 30-11-2012 |
| | | WO 2012160288 A1 | 29-11-2012 |
| WO 2018172983 A1 | 27-09-2018 | NONE | |
| EP 1574551 A1 | 14-09-2005 | AT 510881 T | 15-06-2011 |
| | | AU 2003289145 A1 | 23-06-2004 |
| | | CA 2508577 A1 | 17-06-2004 |
| | | CN 1720295 A | 11-01-2006 |
| | | EP 1574551 A1 | 14-09-2005 |
| | | HK 1085754 A1 | 01-09-2006 |
| | | JP 4209845 B2 | 14-01-2009 |
| | | JP WO2004050764 A1 | 30-03-2006 |
| | | KR 20050085337 A | 29-08-2005 |
| | | TW I276649 B | 21-03-2007 |
| | | US 2006188718 A1 | 24-08-2006 |
| | | WO 2004050764 A1 | 17-06-2004 |
| US 2004180201 A1 | 16-09-2004 | US 2004180201 A1 | 16-09-2004 |
| | | US 2005100501 A1 | 12-05-2005 |
| US 2007213450 A1 | 13-09-2007 | NONE | |
| US 2014080993 A1 | 20-03-2014 | NONE | |
| JP 2005263951 A | 29-09-2005 | NONE | |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 22 15 6639

This annex lists the patent family members relating to the patent documents cited in the above-mentioned European search report. The members are as contained in the European Patent Office EDP file on The European Patent Office is in no way liable for these particulars which are merely given for the purpose of information.

08-07-2022

| Patent document cited in search report | Publication date | Patent family member(s) | Publication date |
|---|---|---|---|
| JP 2006083482 A | 30-03-2006 | JP 4456965 B2 | 28-04-2010 |
| | | JP 2006083482 A | 30-03-2006 |
| JP 2006307367 A | 09-11-2006 | JP 4647384 B2 | 09-03-2011 |
| | | JP 2006307367 A | 09-11-2006 |
| WO 2021229470 A1 | 18-11-2021 | EP 3910000 A1 | 17-11-2021 |
| | | WO 2021229470 A1 | 18-11-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4340563 A
- US 3692618 A
- US 3338992 A
- US 3341394 A
- US 3276944 A
- US 3502538 A
- US 3502763 A
- US 3542615 A
- US 3849241 A


### Non-patent literature cited in the description


- *CHEMICAL ABSTRACTS,* 80-05-7